Europäisches Patentamt

European Patent Office

Office européen des brevets

(19)

(11) EP 0 764 834 A1

(12) EUROPÄISCHE PATENTANMELDUNG

(43) Veröffentlichungstag:
26.03.1997 Patentblatt 1997/13

(51) Int. Cl.$^6$: G01F 1/692, G01F 1/72

(21) Anmeldenummer: 96114219.7

(22) Anmeldetag: 05.09.1996

(84) Benannte Vertragsstaaten:
DE ES FR GB IT SE

(30) Priorität: 20.09.1995 DE 19534906

(71) Anmelder: Deutsche Automobilgesellschaft mbH
38114 Braunschweig (DE)

(72) Erfinder: Daetz, Michael
38473 Tiddische (DE)

(74) Vertreter: Maute, Hans-Jürgen, Dipl.-Ing.
TEMIC TELEFUNKEN microelectronic GmbH
Postfach 35 35
74025 Heilbronn (DE)

(54) Sensoranordnung zum Messen der Masse eines strömenden Mediums nach dem Prinzip des Hitzdraht-Anemometers

(57) Zur Bestimmung der Masse eines strömenden Mediums, insbesondere eines Luftmassenstromes im Ansaugrohr einer Brennkraftmaschine, mittels einer Meßbrücke nach dem Prinzip des Hitzdraht-Anemometers, die über einen Operationsverstärker als eine Konstantwiderstandsregelung realisiert ist, wird ein Filmsensorelement verwendet. Auf diesem Filmsensorelement sind zwei getrennte Widerstandsbahnen zur Verkürzung der Ansprechzeit so strukturiert, daß sie parallel zur Strömungsrichtung eine Bahn an der anströmenden und eine Bahn auf der abströmenden Seite liegen und elektrisch parallel geschaltet sind, so daß eine Stromteilung in Abhängigkeit von den beiden Widerstandswerten gemäß Stromteiler erfolgen kann. Dadurch kann bei stärkerer Abkühlung der vorderen Widerstandsbahn der Stromteiler eine Gegensteuerung mittels dem steigenden Strom in der vorderen Widerstandsbahn und damit höherer elektrischer Leistung erfolgen. Dieses ist insbesondere bei Doppelsensoren zur Erkennung der Strömungsrichtung von Vorteil.

FIG.1

**Beschreibung**

Die Erfindung betrifft eine Sensoranordnung zum Messen der Masse eines strömenden Mediums nach dem Prinzip des Hitzdraht-Anemometers, insbesondere für Kraftfahrzeuge mit einer Brennkraftmaschine, gemäß dem Oberbegriff des Patentanspruchs 1.

Aus der Druckschrift DE 38 02 422 A1 ist eine solche Sensoranordnung bekannt. Als Sensorelemente werden üblicherweise Dünnfilmwiderstände auf verschiedenen Substraten, z. B. Keramik oder Glas, verwendet. Eine entscheidende Größe für die Anwendung von Heißfilm-Anemometern im Ansaugtrakt einer Brennkraftmaschine ist die Ansprechgeschwindigkeit. Eine schnelle Ansprechgeschwindigkeit ist erforderlich, damit der Sensor den Pulsationen des angesaugten Luftstromes folgen und so den wahren Luftstrom anzeigen kann. Ein üblicher Weg, die Ansprechgeschwindigkeit von thermischen Anemometern zu erhöhen, ist, das Sensorelement zu miniaturisieren, um so die thermischen Energiespeicher zu verkleinern.

Dies hat folgende Nachteile:
Die Verschmutzungsempfindlichkeit des Sensorelementes steigt. Bei Verringerung der Länge des Sensorelementes quer zur Strömungsrichtung wird der Luftstrom nur über eine kurze Länge gemittelt, was zu einer Erhöhung der Rauschanteile im Meßsignal führt.

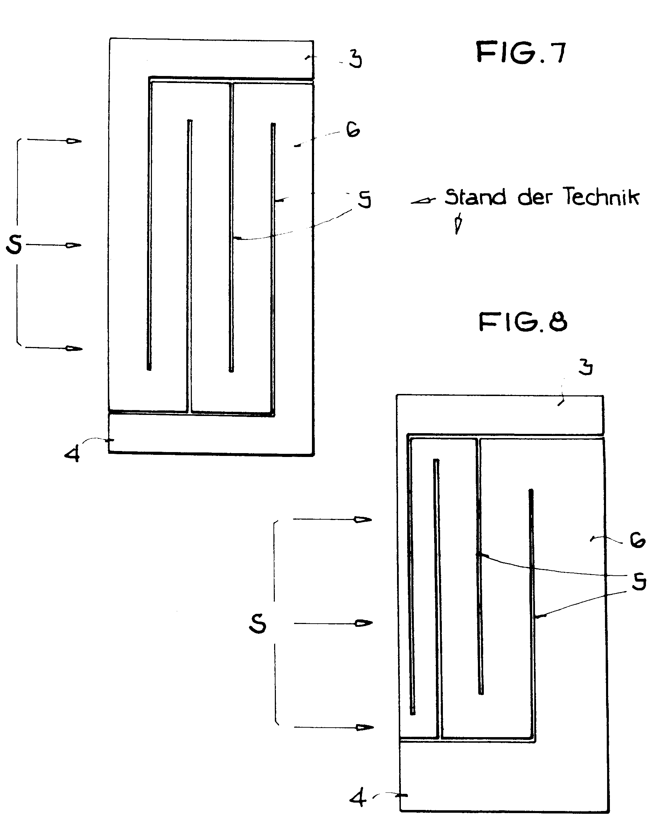

Die Dünnfilmwiderstände werden üblicherweise strukturiert, um einen gewünschten Widerstandswert zu erreichen. Das hat den Vorteil, daß die Schichtdicke des Widerstandsmaterials so gewählt werden kann, wie es für die verwendete Technologie optimal im Hinblick auf die Stabilität des Meßelementes ist. Üblicherweise ist das Widerstandslayout ein Mäander aus gleich breiten hintereinandergeschalteten Stromlaufbahnen. Ein solches Widerstandslayout zeigt Figur 7. Es sind aber auch andere Geometrien bekannt. In der Druckschrift DE 3127061 wird ein Widerstandslayout angegeben, bei dem die Breite der hintereinandergeschalteten Stromlaufbahnen so gewählt ist, daß der resultierende elektrische Widerstand pro Flächeneinheit in einem konstanten Verhältnis zur örtlichen Wärmeübergangszahl steht. Die Breite der Stromlaufbahnen nimmt dann von der Anströmseite her gesehen nach hinten kontinuierlich zu. Solch ein Widerstandslayout ist in Figur 8 gezeigt.

Ein Nachteil dieser Anordnungen ist, daß sich durch die Serienschaltung der Stromlaufbahnen thermische Mitkopplungen ergeben:
Bei einer Erhöhung des Luftstromes werden die nahe zur Anströmkante des Sensors hin gelegenen Stromlaufbahnen relativ stärker gekühlt. Dadurch verringert sich dort die Temperatur relativ zu den nicht so stark gekühlten Stromlaufbahnen. Ein Mitkopplungseffekt entsteht dadurch, daß in den kühleren Stromlaufbahnen wegen des geringeren elektrischen Widerstandes auch weniger elektrische Leistung umgesetzt wird was zu einer weiteren Abkühlung führt. Durch die Konstanttemperaturregelschaltung wird die Temperatur nur im Mittel konstant gehalten. Diese lokalen Temperaturverschiebungen sind für Verlängerungen der Ansprechgeschwindigkeit verantwortlich da sie langsam stattfinden. Von Bedeutung ist dabei auch, daß sich, bei den üblicherweise verwendeten Sensorelementen mit einseitiger Widerstandsbeschichtung, eine Hintereinanderschaltung von Zeitkonstanten ergibt, da sich die statische Temperaturverteilung auf der Unterseite des Meßelementes erst einstellt, wenn sich die Temperaturverteilung auf der Widerstandsseite eingestellt hat.

Wie aus der Literatur, z. B. H. Strickert "Hitzdraht- und Hitzfilm-Anemometrie", 1974, bekannt, wird die Ansprechgeschwindigkeit von Anemometern dadurch erhöht, daß das Konstanttemperaturprinzip verwendet wird. Das Konstanttemperaturprinzip hat sich daher auch gegenüber dem Konstantstromprinzip allgemein durchgesetzt.

Ein ideales Heißfilm-Sensorelement hätte zu jedem Zeitpunkt an allen Punkten seiner Oberfläche die gleiche konstante Temperatur, die gegenüber der Mediumstemperatur um einen festen Wert erhöht ist. Für Heißfilm-Sensorelemente in industriellen Anwendungen oder Anwendungen in Meßaufbauten, bei denen die Herstellkosten nicht so kritisch sind wie bei Heißfilm-Sensorelementen für den Serieneinsatz in Brennkraftmaschinen, werden üblicherweise rundum metallisierte miniaturisierte Sensorelemente verwendet, die dem Ideal recht nahe kommen. Die metallisierte Widerstandsbeschichtung ist nicht strukturiert.

Die in Brennkraftmaschinen eingesetzten Heißfilm-Sensorelemente haben typischerweise Abmessungen von ca. 0,2 mm x 2 mm x 10 mm. Sie sind auf einseitig mit strukturiertem Widerstandsmaterial beschichteten Glas- oder Keramikträgern aufgebaut. Die Ausdehnung des Sensorelementes in Strömungsrichtung S von ca. 2 mm hat zur Folge, daß sich der lokale Wärmeübergangskoeffizient von der Anström- zur Abströmkante des Sensorelementes hin deutlich ändert. Dadurch treten die im Stand der Technik beschriebenen thermischen Mitkopplungseffekte auf, welche die Ansprechgeschwindigkeit des Sensorelementes herabsetzen.

Des weiteren ist eine Konstruktion mit zwei getrennten Widerständen auf einem Trägerkörper unter der Bezeichnung "Split-Film-Sonde" bekannt. Sie ist zum Beispiel im Technical Bulletin No. 20 der Firma TSI Inc., St. Paul, Minnesota USA oder in Druckschrift DE 39 35 778 beschrieben. Sie wird zur Erkennung der Strömungsrichtung durch Vergleich der Signale der beiden Widerstände eingesetzt.

Der vorliegenden Erfindung liegt die Aufgabe zugrunde, ein Sensorelement der eingangs genannten Art anzugeben, bei der die Ansprechgeschwindigkeit erhöht, aber Nachteile, wie sie durch eine Miniaturisierung des Meßelementes auftreten, vermieden werden.

Diese Aufgabe wird durch die kernzeichnenden Merkmale des Patentanspruches 1 gelöst, wonach eine Sensoranordnung verwendet wird, bei der mindestens zwei Widerstandsbahnen parallel geschaltet sind, die derart senkrecht zur Strömungsrichtung angeordnet sind, daß eine Bahn an der anströmenden, vorderen Seite und die andere Bahn an der abströmenden, hinteren Seite liegen. Durch die Parallelschaltung der Widerstandsbahnen wird ein Gegenkopplungseffekt erreicht. Wird die anströmseitige, vordere Widerstandsbahn durch eine Erhöhung des Luftstromes relativ stärker gekühlt, so verringert sich seine Temperatur und damit ihr elektrischer Widerstand. Durch die Verminderung des Widerstandes erhöht sich der Strom durch die vordere Widerstandsbahn, was eine Erhöhung der elektrischen Leistung zur Folge hat. Dieses bewirkt ein Ansteigen der Temperatur in der anströmseitigen, vorderen Widerstandsbahn, also einen Gegenkopplungseffekt. Daher verändert sich die Temperaturverteilung auf dem Sensorelement deutlich weniger als beim Stand der Technik, was zwar ein etwas geringeres Meßsignal, jedoch eine deutliche Verkürzung der Zeitkonstanten bewirkt.

Bei einer bevorzugten Weiterbildung der Erfindung zeigt die symmetrische, mäanderförmige Anordnung der Widerstandsbannen die besten Gegenkoppeleffekte und ermöglicht eine gute Flächenausnutzung bei gegebener Widerstandsgröße, was insbesondere für die Miniaturisierung bedeutsam ist. Analoges gilt auch für deren rechteckförmige Ausprägung, was darüber hinaus auch fertigungstechnisch am einfachsten zu realisieren ist. Als Trägermaterial wird bevorzugt Glas verwendet.

Eine weitere Weiterbildung besteht darin, daß auf einem Trägerkörper zwei elektrisch isolierte Widerstände aufgebracht werden. Die einzelnen Widerstände weisen dann wieder die erfindungsgemäße Parallelschaltung der Widerstandsbahnen auf. Dies dient der Erkennung der Strömungsrichtung und ist bei Verwendung einer Heißfilm-Sonde im Ansaugtrakt einer Brennkraftmaschine von besonderer Wichtigkeit, da in bestimmten Betriebspunkten des Motors durch Schwingungen Rückströmungen auftreten. Werden diese Rückströmungen, wie bis heute üblich, dem Betrage nach erfaßt, ergibt sich eine deutliche Fehlmessung, die nach der Weiterverarbeitung des Meßsignales zu falschen Einspritzzeiten und damit zu einer Verschlechterung der Abgasqualität führt.

Voraussetzung für die richtungsrichtige Messung ist, daß das Meßsignal dem Luftmassenstrom möglichst trägheitslos folgt. Die Zeitdauern von typischen Rückströmungen liegen im Bereich 0 ms bis 10 ms.

Der Einsatz des erfindungsgemäßen Prinzips Parallelschaltung der in Strömungsrichtung hintereinanderliegenden Widerstandsmäander ist daher besonders bei Sonden mit Vorrichtungen zur Erkennung der Strömungsrichtung von Vorteil.

Die Erfindung soll im folgenden anhand von Ausführungsbeispielen bezugnehmend auf die Zeichnungen und einer vereinfachten Modellrechnung erklärt werden.

Es zeigen:

Figur 1     ein Widerstandslayout gemäß der Erfindung mit parallel zur Strömungsrichtung angeordneten, symmetrischen Mäandern, die durch die Anschlüsse 3 und 4 auch elektrisch parallel geschaltet sind;

Figur 2     eine Schnittdarstellung durch das Widerstandslayout gemaß Figur 1;

Figur 3     in einem Strömungsrohr angeordnetes Widerstandslayout gemäß dieser Erfindung, bei dem sich auf einem Trägerkörper zwei getrennte Widerstände befinden, von denen jeder einzelne aus zwei parallelgeschalteten Mäandern aufgebaut ist;

Figur 4     ein vereinfachtes Widerstandslayout gemäß dieser Erfindung mit einem aus zwei parallelen Bahnen bestehenden Widerstand zur Erklärung der Wirkungsweise der Erfindung;

Figur 5     ein vereinfachtes Widerstandslayout mit einem aus zwei in Reihe geschalteten Bahnen bestehenden Widerstand, der als Vergleichsobjekt zu dem in Figur 4 abgebildetem Sensorelement dient;

Figur 6     die Temperaturverteilung auf den Sensorelementen nach Figur 4 und Figur 5;

Figur 7     ein Widerstandslayout nach dem Stand der Technik mit einer gleichmäßigen Breite der Stromlaufbahnen und

Figur 8     ein Widerstandslayout nach dem Stand der Technik mit einer ungleichmäßigen Breite der Stromlaufbahnen.

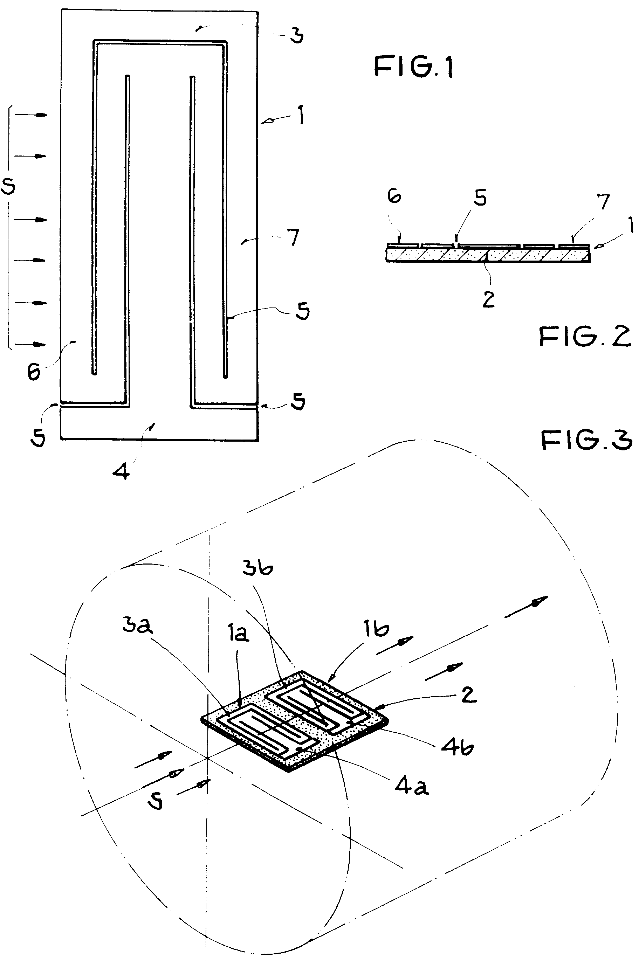

Die Figuren 1 und 2 zeigen in einem Ausführungsbeispiel ein Sensorelement 1 auf einem Trägersubstrat 2 mit den Anschlußbereichen 3 und 4 sowie den senkrecht zur Strömungsrichtung S angeordneten, parallel zueinander liegenden, mäanderförmigen Widerstandsbahnen 6 und 7 mit einer Unterbrechung 5 der leitenden Schicht zur Strukturierung dieser Mäander, wobei in diesem Ausführungsbeispiel eine symmetrische Struktur dieser ausgeführt ist.

In Figur 3 wird ein Anordnungsbeispiel eines erfindungsgemäßen Widerstandslayouts in einem Strömungsrohr dargestellt, wobei auf einem Trägersubstrat 2 zwei erfindungsgemäße Widerstandslayouts 1a und 1b angeordnet sind, die zusätzlich eine Erkennung der Strömungsrichtung ermöglicht.

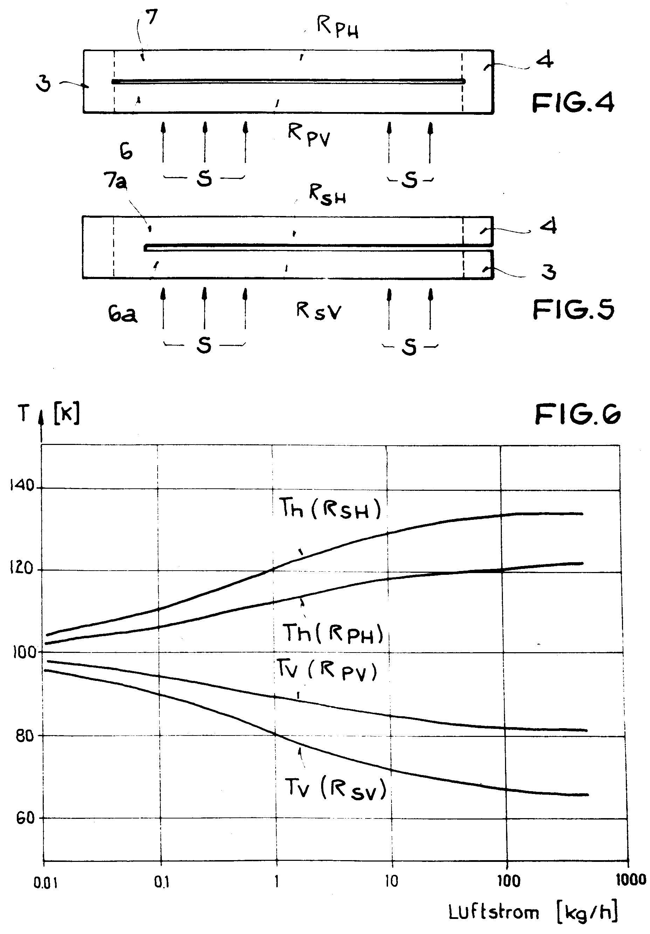

Zur Durchführung einer Beispielsrechnung wird ein stark vereinfachtes Sensormodell mit Parallelschaltung von zwei Leiterbahnen 6 und 7 verwendet, das in Figur 4 abgebildet ist. Als Vergleichsobjekt dient ein Sensorelement mit Reihenschaltung zweier Leiterbahnen 6a und 7a, das in Figur 5 abgebildet ist. In der Rechnung werden die Temperaturverteilungen, die sich als Funktion des Luftstromes einstellen für beide Varianten berechnet und gegenübergestellt. Es werden für beide Varianten die folgenden Annahmen getroffen:

- Die Temperaturen innerhalb einer Widerstandsbahn sind konstant;
- die Widerstände haben einen linearen Temperaturkoeffizienten $\alpha = 3900$ ppm/K;
- der Widerstand $R_0$ der einzelnen Leiterbahnen bei Referenztemperatur beträgt 10 $\Omega$;
- der Widerstandswert der Parallel- bzw. der Reihenschaltung wird so geregelt, daß sich auf dem Sensorelement eine mittlere Übertemperatur von $\delta T = 100$ K zur Umgebungstemperatur einstellt;
- der Wärmestrom durch den Trägerkörper hindurch wird vernachlässigt;
- für die Wärmeübergangskoeffizienten $\lambda_v$ für die vordere Leiterbahn und $\lambda_h$ für die hintere Leiterbahn werden Werte, die in Versuchen ermittelt wurden, eingesetzt.

Berechnung bei Parallelschaltung (vgl. Figur 4):

Die Widerstandswerte $R_{PV}$ und $R_{Ph}$ der vorderen Leiterbahn 6 und der hinteren Leiterbahn 7 können als Funktion ihrer jeweiligen Temperatur $T_v$ bzw. $T_h$ folgendermaßen angegeben werden:

$$R_{PV}(T_V) = R_0 * (1 + \alpha * T_V) \qquad\qquad R_{PH}(T_H) = R_0 * (1 + \alpha * T_H)$$

Die elektrischen Leistungen in der vorderen Leiterbahn $P_v$ und in der hinteren Leiterbahn $P_h$ ergeben sich als Funktion der an beiden Leiterbahnen gleichen anliegenden Spannung U wie folgt:

$$P_V = \frac{U^2}{R_{PV}} \qquad\qquad P_H = \frac{U^2}{R_{PH}}$$

Die Leistungen sind wegen der Wärmeabgabe an die vorbeiströmende Luft über die Wärmeübergangskoeffizienten $\lambda_v$ bzw. $\lambda_h$ mit den Temperaturen $T_V$ bzw. $T_H$ wie folgt verknüpft:

$$P_V = T_V {}^* \lambda v \qquad\qquad P_H = T_H {}^* \lambda h$$

Der Widerstandswert $Rp_{regel}$, auf den die Parallelschaltung von $R_{PV}$ und $R_{PH}$ geregelt wird, ergibt sich mit dem Temperaturkoeffizienten $\alpha$ und der Soll-Übertemperatur $\delta T$ zu :

$$Rp_{regel} = \frac{R_0}{2} * (1+\alpha T)$$

Er errechnet sich andererseits aus den Einzelwiderständen der Parallelschaltung gemäß

$$Rp_{regel} = \frac{R_{PV} {}^* R_{PH}}{R_{PV} + R_{PH}}$$

Die Verknüpfung dieser Gleichungen führt auf die beiden folgenden Beziehungen:

$$R_0 {}^*(1+\alpha {}^* T_V) {}^* T_V {}^* \lambda_V = R_0 {}^*(1+\alpha {}^* T_H) {}^* T_H {}^* \lambda h$$

und

$$\frac{R_0}{2} * (1 + \alpha * \delta T) = R_0 * \frac{(1 + \alpha * T_H) * (1 + \alpha * T_V)}{(2 + \alpha * (T_V + T_H)}$$

Dieses ist ein Gleichungssystem aus 2 Gleichungen mit den 2 Unbekannten $T_v$ und $T_h$, das sich analytisch lösen läßt. Die Auflösung nach $T_v$ oder $T_h$ ist allerdings unhandlich groß, so daß eine numerische Lösung vorgezogen wurde. Die damit berechneten Ergebnisse sind in Figur 6 aufgetragen.

Berechnung bei Serienschaltung (vgl. Figur 5):

Die Widerstandswerte $R_{SV}$ und $R_{Sh}$ der vorderen Leiterbahn 6a und der hinteren Leiterbahn 7a, können als Funktion ihrer jeweiligen Temperatur $T_v$ bzw. $T_h$ folgendermaßen angegeben werden:

$$R_{SV}(T_V) = R_0 \cdot (1 + \alpha * T_V) \qquad\qquad R_{SH}(T_H) = R_0 \cdot (1 + \alpha * T_H)$$

Die elektrischen Leistungen, $P_v$ in der vorderen Leiterbahn und $P_h$ in der hinteren Leiterbahn, ergeben sich als Funktion des durch beide Leiterbahnen fließenden Stromes I wie folgt:

$$P_v = I^2 * R_{SV} \qquad\qquad P_h = I^2 * R_{SH}$$

Die Leistungen sind wegen der Wärmeabgabe an die vorbeiströmende Luft über die Wärmeübergangskoeffizienten $\lambda_v$ bzw. $\lambda_h$ mit den Temperaturen $T_v$ bzw. $T_h$ wie folgt verknüpft:

$$P_V = T_V * \lambda v \qquad\qquad P_H = T_H * \lambda h$$

Der Widerstandswert $Rs_{regel}$, auf den die Serienschaltung von $R_{sv}$ und $R_{sh}$ geregelt wird, ergibt sich mit dem Temperaturkoeffizienten $\alpha$ und der Soll-Übertemperatur $\delta T$ zu

$$Rs_{regel} = 2 * R_0 * (1 + \alpha * \delta T)$$

Er errechnet sich andererseits aus den Einzelwiderständen der Serienschaltung gemäß

$$Rs_{regel} = R_{SV} + R_{SH}$$

Die Verknüpfung dieser Gleichungen führt auf die beiden folgenden Beziehungen:

$$R_0 * (1 + \alpha * T_V) + R_0 * (1 + \alpha * T_H) = 2R_0 * (1 + \alpha * \delta T)$$

und

$$\frac{T_V * \lambda v}{R_0 (1 + \alpha * T_V)} = \frac{T_H * \lambda h}{R_0 (1 + \alpha * T_H)}$$

Dieses ist ein Gleichungssystem aus 2 Gleichungen mit den 2 Unbekannten $T_v$ und $T_h$, das sich analytisch lösen läßt. Die Lösung nach $T_v$ oder $T_h$ ist allerdings unhandlich groß, so daß eine numerische Lösung vorgezogen wurde. Die damit berechneten Ergebnisse sind in Figur 6 aufgetragen.

Wie aus Figur 6 zu entnehmen ist, beträgt die Temperaturdifferenz bei hohem Luftstrom zwischen vorderer und hinterer Leiterbahn bei der Parallelschaltung 40 K im Gegensatz zu 70 K bei der Serienschaltung der Leiterbahnen. Die ungünstige Temperaturdifferenz kann also durch den Einsatz von erfindungsgemäßen Sensorelementen um ca. 40 % reduziert werden. Damit kann mit dieser Anordnung eine Steigerung der Ansprechgeschwindigkeit erreicht werden. Dieses ist besonders dann der Fall, wenn sich die Strömungsrichtung umkehrt, weil dann die Temperaturverteilung von vorderer und hinterer Leiterbahn vertauscht sind und langsame Temperaturumverteilungen stattfinden.

**Patentansprüche**

1. Sensoranordnung zum Messen der Masse eines strömenden Mediums nach dem Prinzip des Hitzdraht-Anemometers, insbesondere für Kraftfahrzeuge mit einer Brennkraftmaschine, mit einem vom Medium umspülten, als Filmwiderstand ausgeführten Strömungsmeßwiderstand (1), der in eine als Konstantwiderstandsregelung realisierte Meßbrücke geschaltet ist, gekennzeichnet dadurch, daß der Strömungsmeßwiderstand (1) aus mindestens zwei Widerstandsbahnen (6, 7) besteht, die derart senkrecht zur Strömungsrichtung (S) angeordnet sind, daß eine Bahn (6) an der anströmenden, vorderen Seite und die andere Bann (7) an der abströmenden, hinteren Seite liegen und daß die beiden Widerstandsbahnen (6, 7) elektrisch parallel geschaltet sind.

2.  Sensoranordnung nach Anspruch 1, dadurch gekennzeichnet, daß eine symmetrische Anordnung mäanderförmiger Widerstandsbahnen vorgesehen ist.

3.  Sensoranordnung nach Anspruch 1 oder 2, dadurch gekennzeichnet, daß sich mindestens zwei rechteckförmig ausgebildete Widerstandsbahnen (6, 7) auf einem Trägerkörper (2) befinden.

4.  Sensoranordnung nach einem der vorangehenden Ansprüche, dadurch gekennzeichnet, daß das Trägermaterial aus Glas besteht.

5.  Verwendung der Sensoranordnung nach einem der vorangegangenen Ansprüche zur Erkennung der Strömungsrichtung nach dem Prinzip der Split-Film-Sonde, indem zwei dieser Sensoranordnungen (1a,1b) in Strömungsrichtung (S) hintereinander, bevorzugt auf einem Trägersubstrat (2), angeordnet sind.

FIG.1

FIG.2

FIG.3

FIG.4

FIG.5

FIG.6

FIG.7

→ Stand der Technik

FIG.8

EP 0 764 834 A1

| Europäisches Patentamt | EUROPÄISCHER RECHERCHENBERICHT | Nummer der Anmeldung EP 96 11 4219 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | FR-A-2 620 820 (DEGUSSA) 24.März 1989 | 1,3 | G01F1/692 |
| Y | * Seite 1, letzter Absatz - Seite 2, Absatz 1 * <br> * Seite 8, Zeile 16 - Seite 9, Zeile 10; Abbildung 1 * <br> --- | 1,4,5 | G01F1/72 |
| Y | EP-A-0 137 687 (INNOVUS) 17.April 1985 <br> * Seite 16, Zeile 22 - Zeile 32; Abbildung 7 * <br> --- | 1,5 | |
| Y | EP-A-0 388 777 (SIEMENS AG) 26.September 1990 <br> * Spalte 2, Zeile 16 - Zeile 20 * <br> ----- | 1,4 | |

| | | | RECHERCHIERTE SACHGEBIETE (Int.Cl.6) |
|---|---|---|---|
| | | | G01F |

Der vorliegende Recherchenbericht wurde für alle Patentansprüche erstellt

| Recherchenort | Abschlußdatum der Recherche | Prüfer |
|---|---|---|
| DEN HAAG | 26.November 1996 | Pflugfelder, G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)

10